# DEMANDE DE BREVET EUROPEEN

(11) **EP 3 375 298 A1**
(43) Date de publication de la demande: **19.09.2018**
(21) Numéro de dépôt: 18161843.0
(22) Date de dépôt: 14.03.2018
(51) Int. Cl.: A23L 2/52, A23L 2/54, A23L 2/58, A23L 2/66, A23L 2/68

(54) **COMPOSITION LIQUIDE COMPRENANT DE LA PHYCOCYANINE**

(30) Priorité: 17.03.2017 FR 1752205
(71) Demandeur: L'Abeille, 49300 Cholet (FR)
(72) Inventeur: LEBRUN, Simon, 44230 SAINT SEBASTIEN SUR LOIRE (FR); QUEGUINER, Gilles, 49450 SEVREMOINE (FR); BOURSICOT, Christophe, 44190 SAINT HILAIRE DE CLISSON (FR); BOUTTIER ep. THIMOLEON, Nadine, 49280 SAINT CHRISTOPHE DU BOIS (FR)
(74) Mandataire: Oudin, Stéphane

(57) **Abrégé**

La présente invention concerne une formulation et un procédé de fabrication d'une boisson gazeuse comprenant un composé issu d'une algue, pH-sensible, et thermosensible.

Le procédé de fabrication consiste entre autre à injecter ledit composé après les étapes de gazéification et de pasteurisation de ladite boisson, et ladite boisson est formulée afin que son pH soit compris entre 4,2 et 5.

## Description

### Domaine technique

La présente invention concerne le domaine général de la fabrication de compositions liquides, et plus spécifiquement la fabrication de compositions liquides comestibles.

L'invention concerne en particulier la fabrication de compositions liquides gazéifiées.

### Technique antérieure

Il existe depuis quelques années un intérêt grandissant des consommateurs pour les compositions alimentaires dont les apports nutritionnels sont positifs pour la santé.

De ce fait, les algues et les composés qui peuvent en être extraits présentent des qualités hautement recherchées. De nombreuses études font en effet état de leurs propriétés anti-cancer, anti-âge ou encore anti-cholestérol.

Parmi les composés de choix qu'il est possible d'extraire à partir d'algues (telles que la spiruline), la phycocyanine présente une combinaison de propriétés très appréciables : alicament, molécule naturellement émettrice de fluorescence, colorant puissant...

Néanmoins, l'emploi de cette molécule, sensible à la chaleur, à la lumière et aux contaminations bactériologiques, engendre des contraintes élevées, tant au niveau de la formulation chimique qu'au niveau du procédé de fabrication à mettre en oeuvre.

Il est en effet connu que la phycocyanine doit être extraite et manipulée dans des conditions stériles, que sa température maximale de stabilité est d'environ 45°C tandis que sa température de dénaturation thermique est de 60°C environ, et qu'elle présente un maximum de stabilité lorsque le pH du milieu est compris entre 5 et 7 (toute variation importante au-delà de ces bornes entraînant une précipitation des molécules). Il faut ainsi rechercher un équilibre entre toutes ces exigences afin de conserver ses propriétés avantageuses.

Ainsi, s'il semble relativement aisé de formuler des boissons aqueuses ou des sirops, tels que décrits par exemple dans les documents CN103054117 A, JP2005295829 A2, ou RU2283003 C1, la fabrication de sodas reste un challenge important.

En effet, la fabrication de sodas comprend nécessairement une étape de carbonatation de la boisson, qui mène à l'obtention de produits dans une gamme de pH n'excédant pas le plus souvent une valeur de 4 (cette acidité étant entre autre due à la réaction du dioxyde de carbone avec l'eau, menant à la formation d'acide carbonique). Par exemple, les colas présentent un pH inférieur à 3,3 tandis que les limonades ne dépassent pas un pH de 3,8. Cette gamme de pH est rédhibitoire pour l'usage de phycocyanine. Ainsi, la fabrication d'une boisson gazeuse comprenant cette molécule constitue un réel challenge technique.

### Exposé de l'invention

La présente invention vise ainsi à remédier aux inconvénients précédemment décrits en proposant une formulation et un procédé de fabrication adaptés, dans le but de produire une boisson gazeuse comprenant de la phycocyanine.

Ainsi, l'invention concerne une boisson gazeuse comprenant entre autres de l'eau, de la phycocyanine et au moins un gaz dissous, ladite boisson gazeuse étant remarquable en en ce qu'elle possède un pH compris entre 4,2 et 5.

La phycocyanine présente dans ladite boisson gazeuse peut être naturelle ou artificielle (c'est à dire synthétisée en laboratoire).

Préférentiellement, la phycocyanine présente dans la boisson gazeuse selon l'invention est issue d'un extrait aqueux naturel.

La gamme de pH précédemment définie (4,2-5) est bien adaptée à la fabrication d'une boisson selon l'invention, car il s'agit d'un compromis entre la gamme de pH usuelle des sodas (pH inférieur à 4) et la gamme de pH la plus adaptée à la phycocyanine (pH compris entre 5 et 7).

Préférentiellement, ladite boisson gazeuse possède un pH compris entre 4,4 et 4,8.

Encore plus préférentiellement, ladite boisson gazeuse possède un pH compris entre 4,5 et 4,7.

De manière tout à fait préférée, ladite boisson gazeuse possède un pH de 4,6 ± 0,1.

La boisson selon l'invention est rendue gazeuse par l'adjonction d'au moins un gaz, dissous en solution.

Avantageusement, il est ainsi possible d'employer un gaz unique, un mélange de gaz (injectés ensemble ou séparément), ou des gaz différents.

Avantageusement, l'adjonction du (ou des) gaz peut être effectuée à un même moment ou à des moments différents.

Le (ou les) gaz peut par exemple être choisi dans le groupe contenant : azote, dioxyde d'azote, dioxyde de carbone.

Préférentiellement, le gaz dissous est du dioxyde de carbone. Néanmoins, il est possible d'employer un gaz comprenant de l'azote (l'utilisation de dioxyde d'azote étant connue par exemple dans la préparation et le tirage de certaines bières).

Préférentiellement, la concentration finale en dioxyde de carbone de ladite boisson gazeuse est comprise entre 4 et 10 grammes par litres.

Plus préférentiellement, la concentration finale en dioxyde de carbone de ladite boisson gazeuse est comprise entre 5 et 8 grammes par litres.

Encore plus préférentiellement, la concentration finale en dioxyde de carbone de ladite boisson gazeuse est inférieure ou égale à 6,5 grammes par litres.

Tout à fait préférentiellement, la concentration finale en dioxyde de carbone de ladite boisson gazeuse est comprise entre 5,5 et 6,5 grammes par litres.

Avantageusement, tout ou partie de l'eau employée dans la composition de ladite boisson gazeuse est de l'eau osmosée. Tout à fait avantageusement, la totalité de l'eau comprise dans la boisson selon l'invention est de l'eau osmosée.

Selon un mode de réalisation préféré, afin de garantir la stabilité de ladite boisson gazeuse, celle-ci comprend au moins un conservateur.

Préférentiellement, ledit conservateur est choisi dans le groupe contenant : benzoate de sodium, sorbate de potassium, acide benzoïque, acide sorbique, sorbate de calcium, ascorbate de sodium, l'acide citrique, le benzoate de sodium, les sels d'édétate, un paraben tel que les p-hydroxybenzoates de méthyle, éthyle, propyle et butyle, bromure de domiphen, propionate de sodium, glycol de propylène, alcools, et leurs mélanges.

Encore plus préférentiellement, ladite boisson gazeuse comprend un mélange de conservateurs consistant en un mélange de benzoate de sodium et de sorbate de potassium.

Avantageusement, la concentration finale en benzoate de sodium, employé seul dans ladite boisson gazeuse, ne dépasse pas 0,3 grammes par litre.

Préférentiellement, la concentration finale en benzoate de sodium de ladite boisson gazeuse est comprise entre 0,1 et 0,2 grammes par litre.

De manière tout à fait préférée, la concentration finale en benzoate de sodium de ladite boisson gazeuse est de 0,15 grammes par litre.

Préférentiellement, lorsque le benzoate de sodium est employé en combinaison avec le sorbate de potassium, la concentration finale en benzoate de sodium de ladite boisson gazeuse est au plus de 0,15 grammes par litre.

Tout à fait préférentiellement, lorsque le benzoate de sodium est employé en combinaison avec le sorbate de potassium, la concentration finale en benzoate de sodium de ladite boisson gazeuse est de 0,15 grammes par litre.

Avantageusement, la concentration finale en sorbate de potassium, employé seul dans ladite boisson gazeuse, ne dépasse pas 0,3 grammes par litre.

Préférentiellement, la concentration finale en sorbate de potassium de ladite boisson gazeuse est comprise entre 0,2 et 0,3 grammes par litre.

De manière tout à fait préférée, la concentration finale en sorbate de potassium de ladite boisson gazeuse est de 0,25 grammes par litre.

Préférentiellement, lorsque le sorbate de potassium est employé en combinaison avec le benzoate de sodium, la concentration finale en benzoate de sodium de ladite boisson gazeuse est au plus de 0,25 grammes par litre.

Tout à fait préférentiellement, lorsque le sorbate de potassium est employé en combinaison avec le benzoate de sodium, la concentration finale en benzoate de sodium de ladite boisson gazeuse est de 0,25 grammes par litre.

Avantageusement, ladite boisson gazeuse contient moins de 0,1% en poids de pectine.

Avantageusement, ladite boisson gazeuse contient moins de 0,1% en poids d'une source de pectine.

Préférentiellement, ladite boisson gazeuse ne contient pas de pectine. On entend par là qu'elle ne contient pas de pectine et/ou qu'elle ne contient aucune source possible de pectine.

Selon un mode de réalisation préféré, afin de garantir la stabilité de ladite boisson gazeuse, celle-ci comprend au moins un agent anti-oxydant, tel que l'hydroxytyrosol.

Avantageusement, ladite boisson gazeuse comprend au moins un arôme. Ledit arôme peut se présenter sous forme solide ou liquide. Préférentiellement, ledit arôme se présente sous forme liquide. Ledit arôme sous forme liquide peut être alcoolisé (c'est-à-dire que ses constituants sont dissous dans un solvant comprenant de l'alcool avant son introduction dans la boisson selon l'invention) ou non-alcoolisé (c'est-à-dire que ses constituants sont dissous dans un solvant ne comprenant pas d'alcool avant son introduction dans la boisson selon l'invention). Ledit arôme comprenant au moins un composant parmi : agent gustatif, alcool, agent stabilisant, agent anti-oxydant, agent de préservation. Ledit arôme comprend au moins un agent gustatif apte à conférer un goût agréable à la boisson gazeuse.

Préférentiellement, ledit arôme est un arôme alcoolisé. Préférentiellement, qu'elle contienne ou pas un arôme alcoolisé, la boisson gazeuse contient une concentration en alcool ne dépassant pas 0,5% et/ou présente un degré d'alcool ne dépassant pas 0,5 degré. Plus préférentiellement, la boisson gazeuse présente un degré d'alcool ne dépassant pas 0,36 degré. Tout à fait préférentiellement, la boisson gazeuse présente un degré d'alcool ne dépassant pas 0,15 degré (ce qui correspond à une concentration en alcool ne dépassant pas 0,15%).

Avantageusement, avant son introduction dans la boisson selon l'invention, l'arôme (quelle que soit sa nature) contient moins de 5% en poids de pectine.

Avantageusement, avant son introduction dans la boisson selon l'invention, l'arôme (quelle que soit sa nature) contient moins de 5% en poids d'une source de pectine.

Préférentiellement, avant son introduction dans la boisson selon l'invention, l'arôme (quelle que soit sa nature) ne contient pas de pectine. On entend par là qu'il ne contient pas de pectine et/ou qu'il ne contient aucune source possible de pectine.

Avantageusement, ledit arôme comprend au moins un agent stabilisant. Préférentiellement, ledit agent stabilisant est choisi dans le groupe contenant : glucose, fructose, glycérine, glycérol (et ses dérivés), et leurs mélanges.

Encore plus préférentiellement, ledit arôme comprend un mélange d'agents stabilisants consistant en un mélange de glucose et de fructose. Un tel mélange peut provenir d'une source naturelle telle que par exemple le miel, ou artificielle.

De manière tout à fait préférée, ledit arôme comprend un mélange d'agents stabilisants sous forme de sucre inverti (mélange équimolaire de glucose et de fructose).

En outre, selon des variantes de compositions plus élaborées, l'arôme peut comprendre au moins un agent anti-oxydant, tel que l'hydroxytyrosol.

Egalement, selon des variantes de compositions plus élaborées, l'arôme peut comprendre au moins un agent de préservation de ses qualités, tel que du sorbate de potassium ou de l'ascorbate de sodium.

Avantageusement, l'agent gustatif est également un alcool et/ou un agent stabilisant et/ou un agent anti-oxydant et/ou un agent de préservation.

Avantageusement, ladite boisson gazeuse selon l'invention comprend au moins un agent sucrant. Ledit agent sucrant peut être naturel ou artificiel. Ledit agent sucrant peut être un sucre ou tout agent conférant une saveur sucrée à ladite boisson gazeuse, tel que par exemple les polyols.

Préférentiellement, ledit agent sucrant est choisi dans le groupe contenant : glucose, fructose, saccharose, lactose, maltose, leurs sirops, et leurs mélanges.

Encore plus préférentiellement, ledit agent sucrant est du sirop de fructose.

Avantageusement, la concentration finale en sirop de fructose de ladite boisson gazeuse est comprise entre 10 et 70 grammes par litre, ledit sirop étant un sirop à 70 degrés Brix.

Préférentiellement, la concentration finale en sirop de fructose de ladite boisson gazeuse est comprise entre 30 et 60 grammes par litre.

Encore plus préférentiellement, la concentration finale en sirop de fructose de ladite boisson gazeuse est comprise entre 35 et 55 grammes par litre.

De manière tout à fait préférée, la concentration finale en sirop de fructose de ladite boisson gazeuse est de 53, 6 grammes par litre.

Préférentiellement, la phycocyanine est obtenue à partir d'au moins une variété d'algues pouvant appartenir à des embranchements divers. On citera à titre d'exemple : l'embranchement des Cyanophyta (et plus spécifiquement les cyanobactéries incluant la spiruline), l'embranchement des Rhodophyta (algues rouges) ou encore l'embranchement des Cryptophyta.

Plus préférentiellement, la phycocyanine est obtenue à partir la spiruline (Spirulina Platensis, Spirulina Maxima, Arthrospira Platensis...) .

De manière tout à fait préférée, la phycocyanine est obtenu à partir de Spirulina Platensis.

Avantageusement, la concentration finale en phycocyanine de ladite boisson gazeuse ne dépasse pas 0,1 grammes par litre.

Préférentiellement, la concentration finale en phycocyanine de ladite boisson gazeuse est comprise entre 0,005 et 0,05 grammes par litre.

Plus préférentiellement, la concentration finale en phycocyanine de ladite boisson gazeuse est comprise entre 0,01 et 0,04 grammes par litre.

Dans une première variante préférée, la concentration finale en phycocyanine de ladite boisson gazeuse est de 0,032 grammes par litre.

Avantageusement, ladite boisson gazeuse comprend au moins un agent correcteur de pH. Préférentiellement, ledit agent correcteur de pH est un agent basifiant, c'est à dire un agent capable d'augmenter le pH de la composition lors de son ajout.

Encore plus préférentiellement, ledit agent basifiant est choisi parmi les sels d'acide faible et tout à fait préférentiellement dans le groupe comprenant les sels issus de l'acide sorbique, l'acide benzoïque, l'acide citrique, l'acide acétique, l'acide malique, l'acide lactique et l'acide phosphorique.

De manière tout à fait préférée, ledit agent basifiant est également un conservateur. Toute combinaison d'agents basifiants classiques et/ou conservateurs est bien entendu envisageable, et l'Homme du Métier sait choisir la combinaison la plus appropriée en fonction des caractéristiques souhaitées pour ladite boisson gazeuse.

Selon une variante préférée de l'invention, ladite boisson gazeuse comprend un mélange d'agents simultanément correcteurs de pH et conservateurs, sous forme d'un mélange de sorbate de potassium et de benzoate de sodium.

Afin de faciliter la fabrication de ladite boisson gazeuse, la présente invention concerne également une une composition concentrée, remarquable en ce qu'elle comprend d'une part un ou plusieurs des composants de ladite boisson selon l'invention, à l'exception de l'eau, de la phycocyanine et du gaz, à une concentration multipliée par un facteur n par rapport à leur concentration dans la boisson selon l'invention, et d'autre part de l'eau à une concentration divisée par ledit facteur n.

Ladite composition concentrée permet de préparer ladite boisson gazeuse par l'intermédiaire d'une étape de dilution dans de l'eau. Préférentiellement, l'eau employée dans la composition concentrée et l'eau utilisée pour effectuer la dilution est de l'eau osmosée.

Avantageusement, la dilution s'effectue selon un ratio volumique (v/v) compris entre 1/2 (un volume de composition concentrée est utilisé pour produire deux volumes de boisson gazeuse) et 1/10 (un volume de composition concentrée est utilisé pour produire dix volumes de boisson gazeuse).

Préférentiellement, la dilution s'effectue selon un ratio volumique (v/v) de 1/5 (un volume de composition concentrée est utilisé pour produire cinq volumes de boisson gazeuse).

Ainsi, le procédé de fabrication d'une boisson gazeuse selon l'invention est remarquable en ce qu'il comprend les étapes consistant à :
1. au choix :
   o mélanger les composants constituant ladite boisson gazeuse, à l'exception de la phycocyanine et du gaz,
   o diluer une composition concentrée selon l'invention dans de l'eau selon un ratio volumique compris entre 1/2 et 1/10,
2. injecter au moins un gaz dans le mélange obtenu à l'issue de l'étape 1,
3. effectuer une débactérisation du mélange obtenu à l'issue de l'étape 2 à une température supérieure à 40°C,
4. laisser refroidir le mélange débactérisé à une température inférieure à 40°C,
5. injecter la phycocyanine dans ledit mélange refroidi et homogénéiser la préparation.

L'injection de la phycocyanine après l'étape de débactérisation permet de conserver les propriétés physico-chimiques de la molécule.

Préférentiellement, lorsque l'étape 1 consiste à diluer une composition concentrée dans de l'eau, le ratio volumique de dilution est de 1/5.

Avantageusement, l'injection de gaz à l'étape 2 est effectuée sous une pression comprise entre 3 et 7 bars.

Préférentiellement, l'injection de gaz est effectuée sous une pression de 5 bars.

Préférentiellement, le gaz injecté est du dioxyde de carbone.

Avantageusement, la concentration en gaz dans la boisson finalisée est comprise entre 4 et 10 grammes par litre.

Concernant l'étape 3, on entend par débactérisation toute action visant à éliminer les bactéries éventuellement présentes en solution, telle que la filtration, la pasteurisation, ou encore la stérilisation.

Avantageusement, ladite débactérisation est une débactérisation thermo-contrôlée.

On entend par débactérisation thermo-contrôlée toute action visant à éliminer via une augmentation de température les bactéries éventuellement présentes en solution, telle que la pasteurisation (températures allant de 60°C jusqu'à 100°C) ou la stérilisation (températures au-delà de 100°C).

Préférentiellement, la débactérisation thermo-contrôlée est effectuée sous pression, à la même pression que celle appliquée lors de l'étape 2 d'injection de gaz.

Préférentiellement, on procède à la débactérisation thermo-contrôlée par pasteurisation.

Plus préférentiellement, on procède à la débactérisation thermo-contrôlée par pasteurisation à une température comprise entre 80°C et 100°C.

Encore plus préférentiellement, on procède à la débactérisation thermo-contrôlée par pasteurisation à une température de 92°C.

Avantageusement, l'étape 4 consiste à laisser refroidir le mélange débactérisé à une température inférieure à 40°C.

Préférentiellement, l'étape 4 consiste à laisser refroidir le mélange débactérisé à une température inférieure à 35°C.

Avantageusement, l'étape 5 d'injection de la phycocyanine est effectuée sous pression, à la même pression que celle appliquée lors de l'étape d'injection de gaz.

Avantageusement, l'injection de la phycocyanine a lieu sous conditions stériles, grâce à l'emploi d'un système de raccordement stérile.

Préférentiellement, ledit système de raccordement stérile comprend un filtre présentant des pores dont la taille est au plus de 0,5 microns. Plus préférentiellement, ledit filtre présente des pores d'une taille de 0,2 microns.

Avantageusement, ledit système de raccordement stérile assure la jonction entre un premier réservoir stérile contenant ladite composition algale et une pompe à piston à clapet rotatif.

Avantageusement, ladite pompe à piston est une pompe stérilisable.

Préférentiellement, ladite pompe à piston est apte à être stérilisée par vapeur.

Ladite pompe assure l'injection de la composition algale et son mélange aux autres composants de la boisson gazeuse, l'ensemble étant amené vers un second réservoir stérile destiné à contenir le produit fini.

Enfin, il est entendu que l'Homme du Métier sait choisir les composants, les concentrations et les pressions les plus appropriés pour la formulation et la fabrication de ladite boisson gazeuse et de ladite composition concentrée, en fonction des caractéristiques finales visées.

La présente invention concerne également des boissons gazeuses consistant uniquement dans les composants expressément cités à l'exception de tout autre.

### Possibilité d'application industrielle

On comprend bien que la formulation et le procédé de fabrication d'une boisson gazeuse selon l'invention s'appliquent particulièrement bien à toute boisson incorporant une composition algale pH-sensible et thermosensible, tel qu'un extrait aqueux de phycocyanine, afin de préserver entre autres les propriétés physico-chimiques de ladite composition.

Enfin, il va de soi que la présente invention ne se limite pas aux seules formes d'exécution décrites ; elle en embrasse, au contraire, toutes les variantes de réalisation et d'application respectant le même principe.

## Revendications

1. Boisson gazeuse comprenant de l'eau, de la phycocyanine obtenue à partir de la spiruline et au moins un gaz dissous, **caractérisée en ce qu'**elle possède un pH compris entre 4,2 et 5.

2. Boisson gazeuse selon la revendication précédente, **caractérisée en ce que** le gaz dissous est du dioxyde de carbone.

3. Boisson gazeuse selon l'une des revendications 1 ou 2, **caractérisée en ce qu'**elle possède un pH compris entre 4,5 et 4,7.

4. Boisson gazeuse selon l'une quelconque des revendications précédentes, **caractérisée en ce qu'**elle comprend au moins un conservateur choisi dans le groupe contenant : benzoate de sodium, sorbate de potassium, acide benzoïque, acide sorbique, sorbate de calcium, ascorbate de sodium, l'acide citrique, le benzoate de sodium, les sels d'édétate, un paraben tel que les p-hydroxybenzoates de méthyle, éthyle, propyle et butyle, bromure de domiphen, propionate de sodium, glycol de propylène, alcools, et leurs mélanges.

5. Boisson gazeuse selon l'une quelconque des revendications précédentes, **caractérisée en ce qu'**elle comprend au moins un arôme.

6. Boisson gazeuse selon la revendication précédente, **caractérisée en ce que** ledit arôme comprend au moins un agent stabilisant parmi : glucose, fructose, glycérine, glycérol et ses dérivés, et leurs mélanges.

7. Boisson gazeuse selon l'une quelconque des revendications précédentes, **caractérisée en ce qu'**elle comprend au moins un agent sucrant parmi : glucose, fructose, saccharose, lactose, maltose, leurs sirops, et leurs mélanges.

8. Boisson gazeuse selon l'une quelconque des revendications précédentes, **caractérisée en ce qu'**elle contient moins de 0,1% en poids de pectine.

9. Boisson gazeuse selon l'une quelconque des revendications précédentes, **caractérisée en ce qu'**elle comprend un agent correcteur de pH.

10. Utilisation d'une composition concentrée pour la fabrication d'une boisson selon l'une quelconque des revendications 1 à 9, **caractérisée en ce qu'**elle comprend d'une part un ou plusieurs des composants de ladite boisson selon l'invention, à l'exception de l'eau, de la phycocyanine et du gaz, à une concentration multipliée par un facteur n par rapport à leur concentration dans la boisson selon l'invention, et d'autre part de l'eau à une concentration divisée par ledit facteur n.

11. Procédé de préparation d'une boisson gazeuse selon l'une des revendications 1 à 9 **caractérisé en ce qu'**il comprend les étapes consistant à :
1. au choix :
∘ mélanger les composants constituant ladite boisson gazeuse, à l'exception de la phycocyanine et du (ou des) gaz,
∘ diluer une composition concentrée, conforme à la revendication 10, dans de l'eau selon un ratio volumique compris entre 1/2 et 1/10,
2. injecter au moins un gaz dans le mélange obtenu à l'issue de l'étape 1,
3. effectuer une débactérisation du mélange obtenu à l'issue de l'étape 2 à une température supérieure à 40°C,
4. laisser refroidir le mélange débactérisé à une température inférieure à 40°C,
5. injecter la phycocyanine dans ledit mélange refroidi et homogénéiser la préparation.

12. Procédé selon la revendication précédente **caractérisé en ce que** l'étape 3 est une étape de pasteurisation effectuée à une température comprise entre 60°C et 100°C.

13. Procédé selon l'une des revendications 11 ou 12, **caractérisé en ce que** l'étape 2 de débactérisation thermo-contrôlée est effectuée sous pression, à la même pression que celle appliquée lors de l'étape d'injection de gaz.

14. Procédé selon l'une des revendications 11 à 13, **caractérisé en ce que** l'étape 4 d'injection de la phycocyanine est effectuée sous pression, à la même pression que celle appliquée lors de l'étape d'injection de gaz.
